# EUROPÄISCHE PATENTSCHRIFT

(11) **EP 2 807 312 B1**
(45) Veröffentlichungstag und Bekanntmachung des Hinweises auf die Patenterteilung: **28.11.2018**
(21) Anmeldenummer: 13701970.9
(22) Anmeldetag: 23.01.2013
(51) Int. Cl.: E03F 1/00, E02B 11/00

(54) **ANORDNUNG ZWEIER RIGOLENKÖRPER**
ASSEMBLY OF TWO DRAINAGE BODIES
ASSEMBLAGE DE DEUX CORPS DE TRANCHÉE DRAINANTE

(30) Priorität: 24.01.2012 DE 102012100560
(43) Veröffentlichungstag der Anmeldung: 03.12.2014
(73) Patentinhaber: ACO Severin Ahlmann GmbH & Co. KG, 24782 Büdelsdorf (DE)
(72) Erfinder: WANDKOWSKI, Marco, 24119 Kronshagen (DE); MIEZE, Jan, 24111 Kiel (DE); WICHMANN, Thorsten, 24217 Schönberg (DE)
(74) Vertreter: Bohnenberger, Johannes
(86) Internationale Anmeldenummer: PCT/EP2013/051183
(87) Internationale Veröffentlichungsnummer: WO 2013/110629

(56) Entgegenhaltungen:
- WO-A1-2011/089690
- DE-A1-102009 044 412
- GB-A- 2 417 733

## Beschreibung

Die Erfindung betrifft eine Anordnung zweier Rigolenkörper, also von in den Boden einbaubaren Hohl- oder Gitterkörpern, die zur Aufnahme von anfallendem Oberflächenwasser und zu dessen langsamen Abgabe in den Boden oder zur Speicherung des Wassers bestimmt sind.
Oberflächenwasser, das oftmals in größeren Volumenströmen anfällt, wird im Allgemeinen in die öffentliche Kanalisation abgeleitet. Für derartigen Wasseranfall müssen Gebühren entrichtet werden. Um dieses Oberflächenwasser in den Boden versickern zu lassen, sind so genannte Rigolen bekannt, also Bauwerke, die in den Boden eingebaut werden und oftmals sehr große Volumina von Oberflächenwasser aufnehmen können, das dann in den Boden abläuft. Derartige Rigolen werden aus Einzelkörpern aufgebaut, die miteinander verbunden werden. Diese Bauwerke müssen sehr stabil sein, da die Oberfläche, unter welcher die Rigole eingebaut ist, oftmals befahren werden muss. Darum müssen nicht nur die Einzelkörper, aus denen die Rigole aufgebaut ist, stabil sein, es müssen auch die Verbindungen zwischen den Einzelkörpern stabil sein, um dem Gesamtbauwerk die notwendige Stabilität zu verleihen. Weiterhin ist es hierbei notwendig, dass die Rigolenkörper-Verbindungselemente nicht nur die notwendige Festigkeit haben, sie müssen auch leicht und kostengünstig herstellbar und leicht montierbar sein.
Aus der GB 2 417 733 A ist ein Rigolenkörper mit Verbindungselementen nach dem Oberbegriff des Patentanspruches 1 bekannt. Die Verbindungselemente sind dazu geeignet, die Bodenplatten von Rigolenkörpern, die nebeneinander liegen, miteinander zu verbinden.

Der Erfindung liegt die Aufgabe zu Grunde, eine Anordnung zweier Rigolenkörper aufzuzeigen, die eine hohe Festigkeit der Verbindung der Rigolenkörper und eine exakte Ausrichtung zwischen den Rigolenkörpern gewährleistet und dennoch kostengünstig und einfach montierbar ist.

Diese Aufgabe wird mit Blick auf die Anordnung durch den Gegenstand des Anspruchs 1 gelöst.

Insbesondere wird diese Aufgabe durch eine Anordnung umfassend zwei über Rigolenkörper-Verbindungselemente verbundene Rigolenkörper gelöst, wobei die Rigolenkörper-Verbindungselemente jeweils zwei über einen Steg verbundene Zapfen aufweisen, die jeweils in eine Aufnahmeöffnung eines Rigolenkörpers so einsetzbar sind, dass zwei Rigolenkörper über den Steg miteinander verbunden werden, und erste Riegeleinrichtungen aufweisen, über welche ein erstes mit einem zweiten Rigolenkörper-Verbindungselement derart verbindbar ist, dass das erste Rigolenkörper-Verbindungselement in einem ersten Rigolenkörper bündig oder versenkt zu dessen Oberfläche und das zweite Rigolenkörper-Verbindungselement am ersten Rigolenkörper-Verbindungselement über die Oberfläche hervorstehend montierbar sind, wobei die Zapfen der Rigolenkörper-Verbindungselemente ineinander steckbar sind.

Mittels dieser Anordnung sind nun einerseits bei Verbindung von zwei nebeneinander montierten Rigolenkörpern glatte Oberflächen, also Oberflächen ohne hervorstehende Rigolenkörper-Verbindungselemente herstellbar. Andererseits können bei aufeinandergestapelten Rigolenkörpern die oberen Rigolenkörper auf den unteren Rigolenkörpern über die hervorstehenden Rigolenkörper-Verbindungselemente in horizontaler Richtung fixiert werden (eine Fixierung in vertikaler Richtung ist ja nicht notwendig). Hierbei ist es von besonderem Vorteil, wenn das erste und das zweite Rigolenkörper-Verbindungselement identisch ausgebildet sind, so dass nur eine einzige Art von Rigolenkörper-Verbindungselementen hergestellt werden muss.

Vorzugsweise sind die Zapfen in den Aufnahmeöffnungen verriegelbar. Dadurch kann sichergestellt werden, dass auch bei Lasten senkrecht zu den Mantelflächen der Zapfen diese nicht aus den Aufnahmeöffnungen herausgequetscht werden.

Vorzugsweise sind die Zapfen nach einem Unterende hin konisch zulaufend an ihren Außenflächen ausgebildet und weisen vorzugsweise an einem gegenüberliegenden Oberende einen hervorspringenden Oberrand auf, der insbesondere formschlüssig in die Aufnahmeöffnung einsetzbar ist. Insbesondere ist bei einer Fertigung aus Spritzguss die konische Form besonders gut geeignet, um die Rigolenkörper-Verbindungselemente aus der Form herauszunehmen.

Bei einer ersten Ausführungsform der Erfindung sind die Zapfen in der ineinandergesteckten Position miteinander verriegelbar. Dadurch entsteht in einfacher Weise ein sehr stabiler Aufbau.

Bei einer anderen Ausführungsform der Erfindung sind die Zapfen an ihren Enden miteinander verriegelbar. Dies ergibt nicht nur einen einfachen Aufbau, es sind vielmehr auch längere Verbindungselemente zum Verbinden aufeinandergestapelter Rigolenkörper herstellbar.

Bei der ersten Ausführungsform sind die ersten Riegeleinrichtungen vorzugsweise derart ausgebildet, dass sowohl die Zapfen miteinander als auch die Zapfen mit den Rigolenkörpern über diese ersten Riegeleinrichtungen verriegelbar sind. Dieser Aufbau ist besonders einfach.

Bei der zweiten Ausführungsform ist es von Vorteil, wenn die ersten Riegeleinrichtungen zur Verbindung der Zapfen miteinander ausgebildet und die zweiten Riegeleinrichtungen zum Verbinden der Zapfen mit den Rigolenkörpern vorgesehen sind. Dadurch ergibt sich in einfacher Weise der genannte verlängerte Aufbau.

Die Zapfen sind vorzugsweise so ausgebildet, dass sie entweder mit ersten Enden in die Aufnahmeöffnungen versenkt oder bündig zu einer Oberfläche des Rigolenkörpers oder mit einem zweiten Ende in die Aufnahmeöffnung hervorstehend aus der Oberfläche des Rigolenkörpers einsetzbar sind. Dadurch wird eine erhöhte Variabilität der Einsetzbarkeit der Rigolenkörper-Verbindungselemente zur Anordnung von Rigolenkörpern erzielt.

Um aufeinandergestapelte Rigolenkörper auch an ihren Rändern miteinander zu verbinden, sind für jedes Rigolenkörper-Verbindungselement nur zwei ineinander gesteckte oder zwei aufeinander befestigte Zapfen notwendig. Um für diesen Anwendungszweck keine gesonderten Rigolenkörper-Verbindungselemente herstellen zu müssen, ist es von Vorteil, wenn der Steg von den Zapfen abtrennbar oder insbesondere mittig auftrennbar ist. Dadurch können einheitlich mit Zapfen gefertigte Rigolenkörper-Verbindungselemente in Rand-Verbindungselemente umgeändert werden.

Vorteilhafterweise können aufgrund der Variabilität des erfindungsgemäßen Rigolenkörper-Verbindungselementes drei verschiedene Verbindungsarten mit diesem Bauteil realisiert werden, nämlich die Verbindung nebeneinander stehender Rigolenkörper, die Verbindung übereinander stehender Rigolenkörper sowie die Verbindung zweier nebeneinander stehender und zweier übereinanderstehender Rigolenkörper.

Vorzugsweise ist das Rigolenkörper-Verbindungselement als Spritzgussteil, insbesondere aus Kunststoff ausgebildet, wobei die Zapfen (ggf. auch die Stege) als Hohlkörper ausgebildet sind. Dadurch ergibt sich eine erhebliche Materialersparnis, ohne dass die Festigkeit der Rigolenkörper-Verbindungselemente wesentlich verringert wird.

Nachfolgend werden Ausführungsformen der Erfindung anhand von Abbildungen näher erläutert. Hierbei zeigen
- Fig. 1: eine perspektivische Ansicht einer ersten erfindungsgemäße Ausführungsform der Rigolenkörper-Verbindungselemente,
- Fig. 2: zwei ineinandergesteckte Rigolenkörper-Verbindungselemente nach Fig. 1 aus einem Blickwinkel von schräg unten,
- Fig. 3: eine Seitenansicht zweier ineinandergesteckter Rigolenkörper-Verbindungselemente nach den Fig. 1 und 2,
- Fig. 4: eine Vorderansicht zweier ineinandergesteckter Rigolenkörper-Verbindungselemente nach den Fig. 1 bis 3,
- Fig. 5: eine Unteransicht zweier ineinandergesteckter Rigolenkörper-Verbindungselemente nach Fig. 3,
- Fig. 6: einen Schnitt entlang der Linie VI-VI aus Fig. 5,
- Fig. 7: eine perspektivische Ansicht einer Anordnung von Rigolenkörpern,
- Fig. 8: eine perspektivische Detailansicht auf einen Abschnitt des Rigolenkörpers nach Fig. 7 mit einem Rigolenkörper-Verbindungselement in Y-Richtung (X-Z-Ebene),
- Fig. 9: einen Schnitt in der Y-Z-Ebene durch einen Rigolenkörper mit einem Rigolenkörper-Verbindungselement nach Fig. 8,
- Fig. 10: einen Schnitt in der X-Y-Ebene durch die Anordnung mit einem Rigolenkörper-Verbindungselement nach Fig. 8,
- Fig. 11: eine perspektivische Ansicht einer Anordnung von Rigolenkörpern mit zwei aufeinander gestapelten Elementen,
- Fig. 12: einen Schnitt in Y-Z-Richtung durch die Anordnung mit zwei ineinandergesteckten Rigolenkörper-Verbindungselementen, die innerhalb des Rigolenkörpers nach Fig. 11 angeordnet sind,
- Fig. 13: einen Schnitt durch die Anordnung mit zwei ineinandergesteckten Rigolenkörper-Verbindungselementen nach Fig. 12 in der X-Y-Ebene,
- Fig. 14: eine perspektivische Detailansicht in Z-Richtung (X-Y-Ebene) auf den Rigolenkörper gemäß Fig. 11,
- Fig. 15: einen Schnitt in der Y-Z-Ebene durch die Anordnung mit zwei ineinandergesteckten Rigolenkörper-Verbindungselementen nach Fig. 14,
- Fig. 16: einen Schnitt in der X-Y-Ebene durch die Anordnung mit zwei ineinandergesteckten Rigolenkörper-Verbindungselementen nach Fig. 14,
- Fig. 17: eine perspektivische Ansicht von zwei aneinander angereihten Rigolenkörpern mit einer zweiten erfindungsgemäßen Ausführungsform der Rigolenkörper-Verbindungselemente,
- Fig. 18: eine perspektivische Detailansicht in der Y-Richtung (X-Z-Ebene) auf ein mittleres Detail mit einem Rigolenkörper-Verbindungselement nach Fig. 17,
- Fig. 19: einen Schnitt in Y-Z-Ebene durch einen Rigolenkörper mit einem Rigolenkörper-Verbindungselement nach Fig. 18,
- Fig. 20: einen Schnitt in der X-Y-Ebene durch die zwei aneinander angereihten Rigolenkörper mit einem Rigolenkörper-Verbindungselement nach Fig. 18,
- Fig. 21: eine perspektivische Ansicht von zwei aufeinander gestapelten Rigolenkörpern gemäß der Ausführungsform nach den Fig. 17 bis 20,
- Fig. 22: einen Schnitt durch zwei Rigolenkörper-Verbindungselemente, die in Fig. 21 in der Mitte angeordnet sind und zwei Rigolenkörper miteinander verbinden,
- Fig. 23: einen Schnitt durch zwei Rigolenkörper-Verbindungselemente, die in einem Randbereich der Anordnung nach Fig. 21 angeordnet sind in der X-Y-Ebene,
- Fig. 24: eine perspektivische Detailansicht in Z-Richtung (X-Y-Ebene) auf den Randbereich der Rigolenkörper mit zwei Rigolenkörper-Verbindungselementen nach Fig. 23,
- Fig. 25: einen Schnitt in X-Y-Ebene durch zwei Rigolenkörper-Verbindungselemente, die in einem mittleren Bereich der Anordnung zweier Rigolenkörper nach Fig. 21 angeordnet sind und
- Fig. 26: einen Schnitt durch zwei Rigolenkörper-Verbindungselemente nach Fig. 21 in der Y-Z-Ebene.

In der nachfolgenden Beschreibung werden für gleiche und gleich wirkende Teile dieselben Bezugsziffern verwendet.

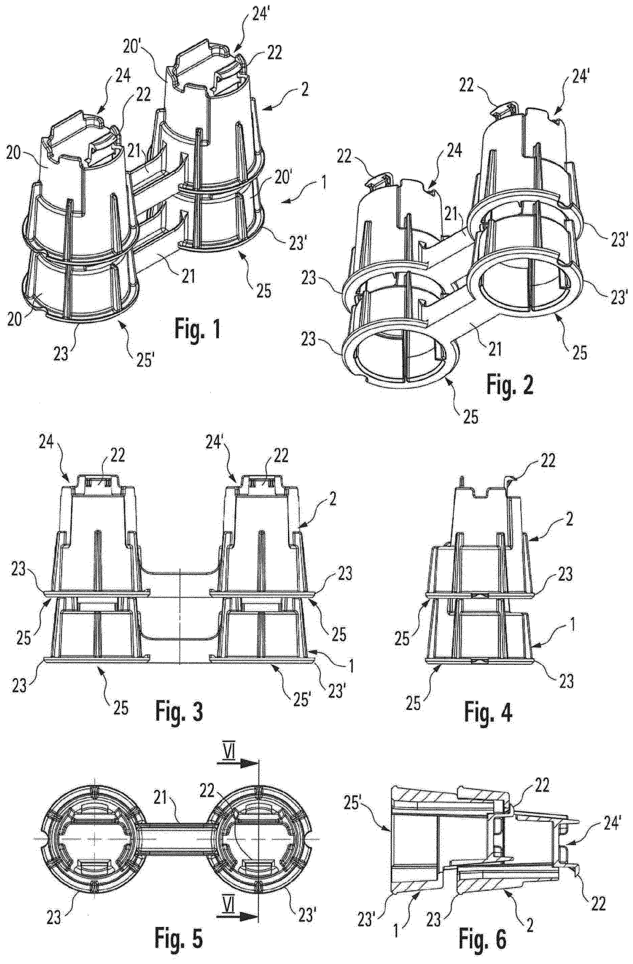

Bei der in den Fig. 1 bis 6 im Detail gezeigten ersten bevorzugten Ausführungsform des Rigolenkörper-Verbindungselements sind zwei derartige Rigolenkörper-Verbindungselemente 1 und 2 ineinander gesteckt bzw. ineinander gestapelt. Die beiden Rigolenkörper-Verbindungselemente 1, 2 sind identisch als Kunststoff-Spritzgussteile ausgebildet und weisen jeweils Zapfen 20, 20' auf, die eine konische Außenform aufweisen, welche zu Unterenden 24, 24' hin konisch zulaufen.

An Oberenden 25, 25' sind Oberränder 23, 23' vorgesehen, die flanschartig nach außen hervorstehen.

Jeweils zwei der Zapfen 20, 20' sind über einen Steg 21 miteinander verbunden.

Weiterhin sind an den Unterenden 24, 24' der Zapfen 20, 20' erste Riegeleinrichtungen 22 vorgesehen. Diese Riegeleinrichtungen 22 kommen - wie insbesondere aus Fig. 6 hervorgeht - beim Ineinander-Stecken bzw. -Stapeln, wie in Fig. 1 und 2 gezeigt - mit dem Unterende 24, 24' des jeweiligen oberen Zapfens 20 bzw. 20' in Schnappeingriff, so dass die beiden Rigolenkörper-Verbindungselemente 1, 2 nach einem festen Ineinander-Stecken und Einschnappen der ersten Riegeleinrichtungen 22 stabil miteinander verbunden sind. Allerdings können diese Riegel 22 auch bei entsprechender Verformung mittels eines Werkzeugs wieder geöffnet werden.

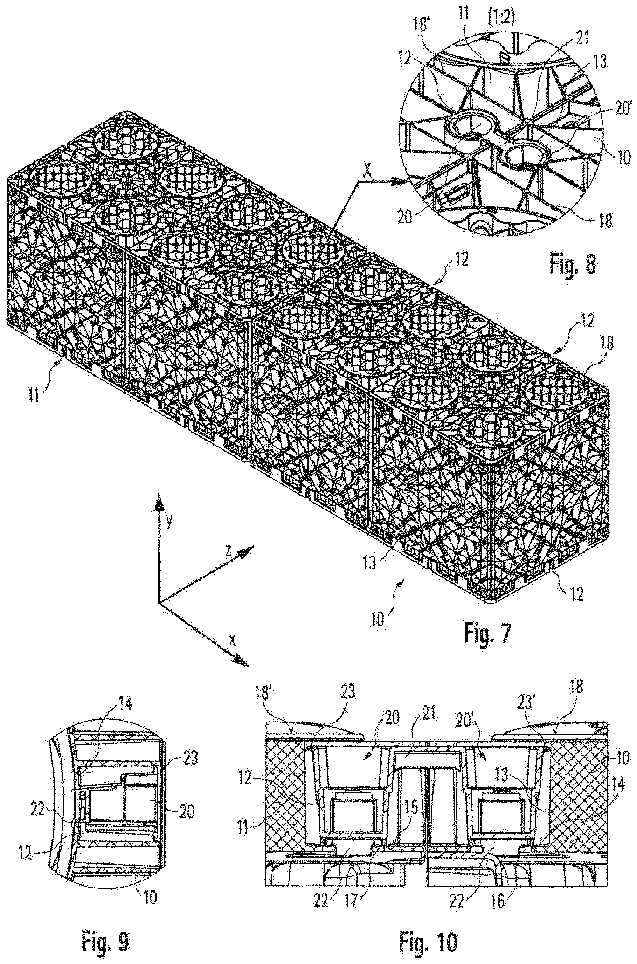

In Fig. 7 sind zwei Rigolenkörper 10, 11 mit ihren kleinen Seiten aneinandergrenzend aneinandergereiht und über Rigolenkörper-Verbindungselemente miteinander verbunden. Die Fig. 9 und 10 zeigen verschiedene Schnitte und Fig. 8 eine perspektivische Detailansicht auf ein Rigolenkörper-Verbindungselement, das außenseitig, im Wesentlichen bündig zu einer Oberfläche 18 zwischen den zwei Rigolenkörpern 10, 11 in deren Aufnahmeöffnungen 12, 13 gesteckt ist.

Aus den Abbildungen 8 bis 10 geht hervor, dass die ersten Riegeleinrichtungen 22 durch Öffnungen in einem Boden 14, 15 der Rigolenkörper 10, 11 hindurchragen und dort einschnappen, so dass die Rigolenkörper-Verbindungselemente 1, 2 fest im Rigolenkörper 10, 11 verriegelt sind.

Während die Außenflächen der Zapfen 20, 20' frei in den Aufnahmeöffnungen 12, 13 sitzen, stehen die Oberränder 23, 23' mit den Wänden der Ausnehmungen 12, 13 in formschlüssiger Verbindung, so dass die zwei Rigolenkörper 10, 11 über den Steg 21 im Wesentlichen spielfrei miteinander verbunden sind.

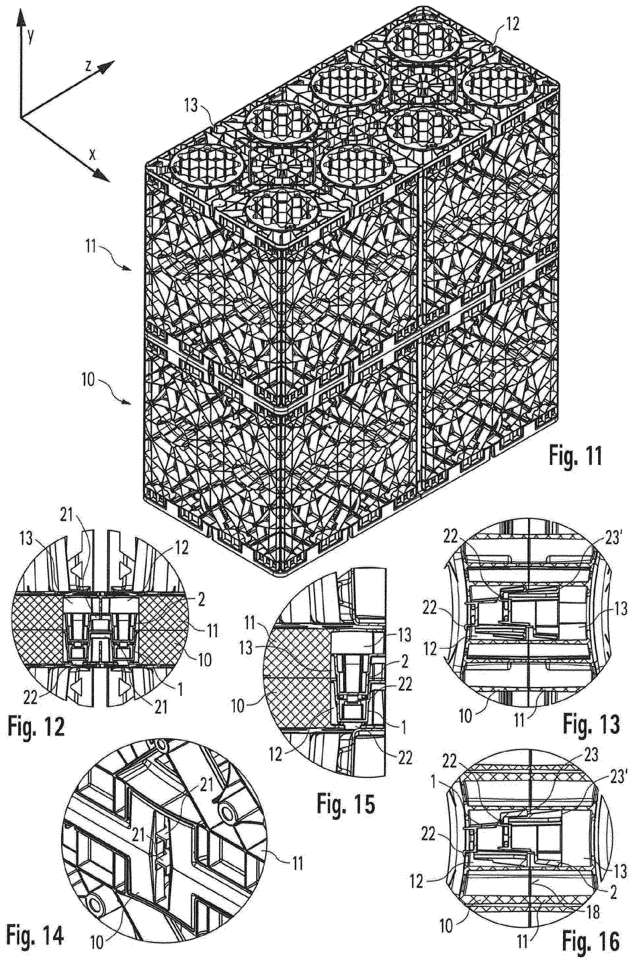

Aus den Fig. 11 bis 16 ist ersichtlich, wie die Rigolenkörper-Verbindungselemente 1, 2 zwei aufeinander gestapelte Rigolenkörper 10, 11 miteinander verbinden.

Hierbei sind zunächst zwei Rigolenkörper-Verbindungselemente 1, 2 aufeinander gestapelt. Wie insbesondere aus den Fig. 12, 13, 15 und 16 hervorgeht, steckt das "untere" Rigolenkörper-Verbindungselement mit seinen Zapfen 20, 20' so tief in dem einen Rigolenkörper 10, dass es mit seinem Oberrand 23 etwas unterhalb der Oberfläche 18 des dazugehörigen Rigolenkörpers 10 in der Aufnahmeöffnung 12 sitzt. Weiterhin ist es mit seiner ersten Riegeleinrichtung 22 im Rigolenkörper 10 befestigt.

Das "obere" Rigolenkörper-Verbindungselement 2 sitzt im ersten Rigolenkörper-Verbindungselement 1 und ist mit diesem durch seine ersten Riegeleinrichtungen 22 fest verbunden. Mit seinem Oberende 25, 25' bzw. mit seinem Oberrand 23' steht dieses Rigolenkörper-Verbindungselement 2 weit über die Oberfläche 18 des Rigolenkörpers 10 hervor, so dass der obere Rigolenkörper 11 (gemäß Fig. 11) so auf den unteren Rigolenkörper 10 aufgesetzt werden kann, dass seine Aufnahmeöffnung 13 mit der Aufnahmeöffnung 12 des unteren Rigolenkörpers 10 fluchtet und das "obere" Rigolenkörper-Verbindungselement 2 in dieser Aufnahmeöffnung 13 steckt und mit seinem Oberrand 23' mit der Wand der Öffnung 13 in formschlüssigem Eingriff steht. Dadurch ist gewährleistet, dass eine Verschiebung in der X-Z-Ebene, also in der Horizontalen, sicher verhindert wird. Es ist möglich, dass der "obere" Rigolenkörper 11 in Richtung eines "oberen" Rigolenkörper-Verbindungselementes 2 geschoben werden kann, um den "oberen" Rigolenkörper 11 mit dem "oberen" Rigolenkörper-Verbindungselement 2 in Verbindung zu bringen. Das "obere" Rigolenkörper-Verbindungselement 2 dient dabei als Orientierungshilfe für den oberen Rigolenkörper 11. Eine Fixierung des "oberen" Rigolenkörper-Verbindungselements 2 im oberen Rigolenkörper 11 ist nicht notwendig, da diese Verbindung in Vertikalrichtung aufgrund der Schwerkraft und auf der Gesamtanordnung lastenden Bodens ohnehin nicht gelöst wird.

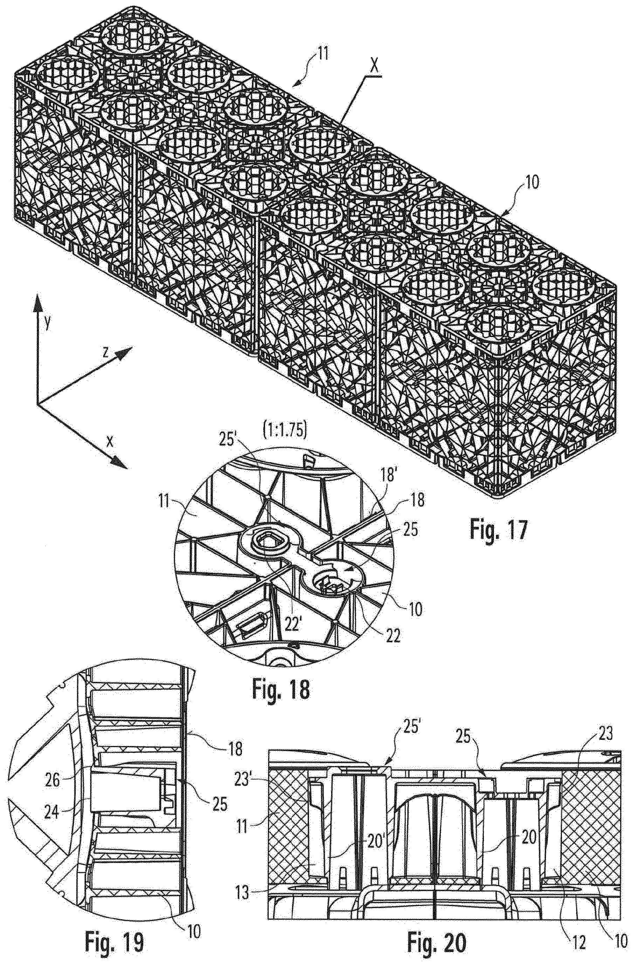

Nachfolgend wird anhand der Fig. 17 bis 26 eine weitere bevorzugte Ausführungsform des Rigolenkörper-Verbindungselements beschrieben.

Diese Ausführungsform des Rigolenkörper-Verbindungselements unterscheidet sich von der zuvor beschriebenen zunächst dadurch, dass die Verbindung von zwei Rigolenkörper-Verbindungselementen 1 und 2 an deren Oberenden 25, 25' (siehe Fig. 18 bis 20) geschieht. An diesen Oberenden 25, 25' sind die ersten Riegeleinrichtungen 22, 22' vorgesehen, die einen Schnappeingriff von zwei Rigolenkörper-Verbindungselementen 1 und 2 miteinander ermöglichen.

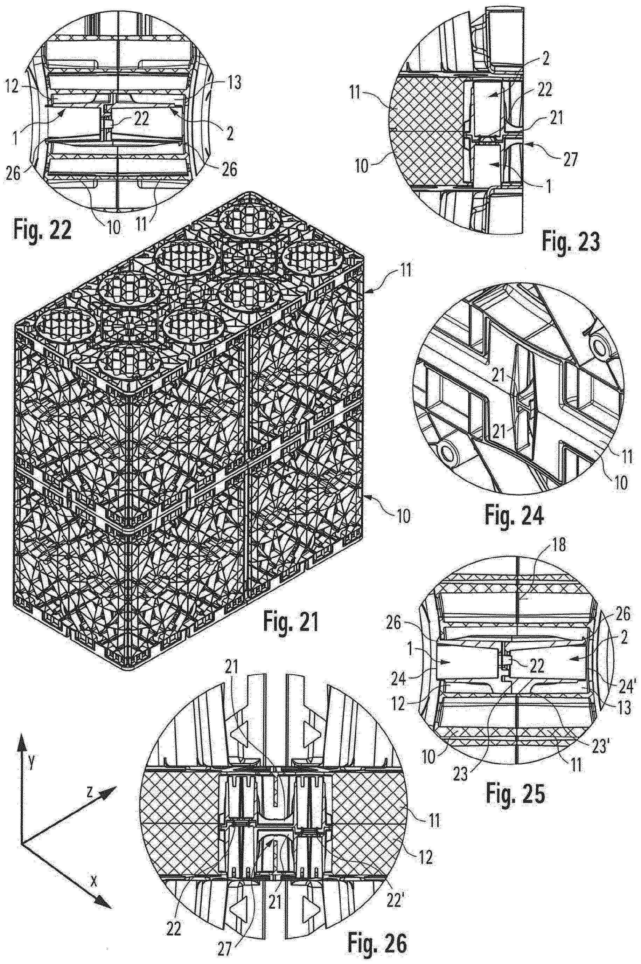

An den Unterenden 24, 24' sind zweite Riegeleinrichtungen 26 vorgesehen, welche mit dem unteren Rigolenkörper 10 in Schnappeingriff gelangen (siehe Fig. 19, 22 und 25), so dass das erste Rigolenkörper-Verbindungselement 1 fest mit dem Rigolenkörper 10 verbunden ist. Die Oberränder 23, 23' stehen wiederum mit den Wandungen der Aufnahmeöffnungen 12, 13 in formschlüssigem Eingriff (siehe Fig. 25).

Die Zapfen 20, 20' sind verschieden lang, wie dies insbesondere aus den Fig. 18 und 20 hervorgeht, so dass die Oberenden 25, 25' der Zapfen 20, 20' unterschiedlich tief in den Aufnahmeöffnungen 12, 13 sitzen. Wenn dann zwei Rigolenkörper-Verbindungselemente 1, 2 miteinander verbunden sind, wie dies beispielsweise in den Fig. 22 bis 26 gezeigt ist, steckt der Oberrand 23' des "oberen" Rigolenkörper-Verbindungselementes 2 sowohl in der Aufnahmeöffnung 12 des unteren Rigolenkörpers 10 als auch in der Aufnahmeöffnung 13 des oberen Rigolenkörpers 11 (siehe Fig. 25) und steht dort in formschlüssigem Eingriff mit den Wänden der Aufnahmeöffnungen 12, 13. Dadurch ist gewährleistet, dass eine maximale Festigkeit des Rigolenkörper-Verbindungselementes gegenüber einem horizontalen Verschieben aufeinander gestapelter Rigolenkörper 10, 11 gewährleistet wird.

Weiterhin ist das Aufsetzen eines oberen Rigolenkörpers 11 auf einen unteren Rigolenkörper 10 gegenüber der zuvor gezeigten Ausführungsform vereinfacht, da die dünneren Unterenden 24' des "oberen" Rigolenkörper-Verbindungselements 2 über die Oberfläche 18 des unteren Rigolenkörpers 10 herausstehen und somit ein relativ großzügiges Spiel zwischen den Zapfen und den Wänden der Aufnahmeöffnung 13 besteht. Der formschlüssige Eingriff erfolgt ja nur im Bereich der Oberränder 23, 23' (siehe insbesondere Fig. 25).

Aus den Fig. 24 und 26 geht ein weiteres Detail in Bezug auf den Steg 21 hervor. Dieser Steg 21 weist eine Trennkerbe 27 (siehe Fig. 26) auf, an welcher er aufgetrennt werden kann, wie dies dann geschieht, wenn (wie in den Fig. 23 und 24 gezeigt) Rigolenkörper-Verbindungselemente randseitig eingebaut sind und nur vertikal aufeinander gestapelte Rigolenkörper 10, 11 miteinander verbinden müssen. Diese Auftrennung des Stegs 21 ist natürlich auch bei der zuvor gezeigten bevorzugten Ausführungsform des Rigolenkörper-Verbindungselements gewährleistet.

Beide zuvor beschriebenen Ausführungsformen der Erfindung zeichnen sich auch dadurch aus, dass nur ein einziger "Typ" von Rigolenkörper-Verbindungselement gefertigt werden muss. Durch die Verbindung von zwei Rigolenkörper-Verbindungselementen miteinander kann sowohl eine Oberflächenbündigkeit (bei randseitiger Montage) oder ein Hervorstehen des einen Rigolenkörper-Verbindungselements aus der dazugehörigen Aufnahmeöffnung zum Verbinden vertikal aufeinander gestapelter Rigolenkörper gewährleistet werden.

### Bezugszeichenliste

- 1: Rigolenkörper-Verbindungselement
- 2: Rigolenkörper-Verbindungselement
- 10: Rigolenkörper
- 11: Rigolenkörper
- 12: Aufnahmeöffnung
- 13: Aufnahmeöffnung
- 14: Boden
- 18, 18': Oberfläche
- 20, 20': Zapfen
- 21: Steg
- 22: erste Riegeleinrichtung
- 23, 23': Oberrand
- 24, 24': Unterende
- 25, 25': Oberende
- 26: zweite Riegeleinrichtung
- 27: Trennkerbe

## Patentansprüche

1. Anordnung umfassend zwei über Rigolenkörper-Verbindungselemente (1, 2) verbundene Rigolenkörper (10, 11), wobei die Rigolenkörper-Verbindungselemente (1, 2) jeweils aufweisen:
zwei über einen Steg (21) verbundene Zapfen (20, 20'), die jeweils in eine Aufnahmeöffnung (12, 13) eines Rigolenkörpers (10, 11) so einsetzbar sind, dass zwei Rigolenkörper (10, 11) über den Steg (21) miteinander verbunden werden,
erste Riegeleinrichtungen (22), über welche ein erstes (1) mit einem zweiten Rigolenkörper-Verbindungselement (2) derart verbindbar ist, dass das erste Rigolenkörper-Verbindungselement (1) in einem ersten Rigolenkörper (10) bündig oder versenkt zu dessen Oberfläche (18) und das zweite Rigolenkörper-Verbindungselement (2) am ersten Rigolenkörper-Verbindungselement (1) über die Oberfläche (18) hervorstehend montierbar sind,
**dadurch gekennzeichnet, dass**
die Zapfen (20, 20') der Rigolenkörper-Verbindungselemente (1, 2) ineinander steckbar sind.

2. Anordnung nach Anspruch 1,
**dadurch gekennzeichnet, dass**
die Zapfen (20, 20') in der Aufnahmeöffnung (12, 13) verriegelbar sind.

3. Anordnung nach einem der vorhergehenden Ansprüche,
**dadurch gekennzeichnet, dass**
die Zapfen (20, 20') nach einem Unterende (24, 24') hin konisch zulaufende Außenflächen aufweisen und vorzugsweise an einem gegenüberliegenden Oberende (25, 25') einen hervorspringenden Oberrand (23, 23') aufweisen, der insbesondere formschlüssig in die Aufnahmeöffnung (16, 17) einsetzbar ist.

4. Anordnung nach einem der vorhergehenden Ansprüche,
**dadurch gekennzeichnet, dass**
das erste (1) und das zweite Rigolenkörper-Verbindungselement (2) identisch ausgebildet sind.

5. Anordnung nach einem der vorhergehenden Ansprüche,
**dadurch gekennzeichnet, dass**
die Zapfen (20, 20') in der ineinandergesteckten Position miteinander verriegelbar sind.

6. Anordnung nach einem der vorhergehenden Ansprüche,
**dadurch gekennzeichnet, dass**
die Zapfen (20, 20') an Enden miteinander verriegelbar sind.

7. Anordnung nach einem der vorhergehenden Ansprüche,
**dadurch gekennzeichnet, dass**
die ersten Riegeleinrichtungen (22, 22') derart ausgebildet sind, dass sowohl die Zapfen (20, 20') miteinander als auch die Zapfen (20, 20') mit den Rigolenkörpern (10, 11) über die ersten Riegeleinrichtungen (22, 22') verriegelbar sind.

8. Anordnung nach einem der vorhergehenden Ansprüche,
**dadurch gekennzeichnet, dass**
die ersten Riegeleinrichtungen (22, 22') zur Verbindung der Zapfen (20, 20') miteinander ausgebildet und zweite Riegeleinrichtungen (26) zum Verbinden der Zapfen (20, 20') mit den Rigolenkörpern (10, 11) vorgesehen sind.

9. Anordnung nach einem der vorhergehenden Ansprüche,
**dadurch gekennzeichnet, dass**
die Zapfen (20, 20') so ausgebildet sind, dass sie entweder mit ersten Enden (24, 24') in die Aufnahmeöffnung (12, 13) versenkt oder bündig zu einer Oberfläche (18) des Rigolenkörpers (10, 11) oder mit einem zweiten Ende (25, 25') in die Aufnahmeöffnung (12, 13) hervorstehend aus der Oberfläche (18) des Rigolenkörpers (10, 11) einsetzbar sind.

10. Anordnung nach einem der vorhergehenden Ansprüche,
**dadurch gekennzeichnet, dass**
der Steg (21) von den Zapfen (20, 20') abtrennbar oder insbesondere mittig auftrennbar ist.

11. Anordnung nach einem der vorhergehenden Ansprüche,
**dadurch gekennzeichnet, dass**
das Rigolenkörper-Verbindungselement (1, 2) als Spritzgussteil, insbesondere aus Kunststoff ausgebildet ist und dass die Zapfen (20, 20') und/oder der Steg (21) als Hohlkörper ausgebildet sind.

## Claims

1. An assembly comprising two drainage bodies (10, 11) connected via drainage body connecting elements (1, 2), each of the drainage body connecting elements (1, 2) comprising:
two pegs (20, 20') which are connected via a web (21) and are each insertable in a receiving orifice (12, 13) of a drainage body (10, 11) so that two drainage bodies (10, 11) are connected together via the web (21),
first locking devices (22) via which a first drainage body connecting element (1) is connectable to a second drainage body connecting element (2) such that the first drainage body connecting element (1) is mountable in a first drainage body (10) to be flush or countersunk to the surface (18) thereof, and the second drainage body connecting element (2) is mountable on the first drainage body connecting element (1) to protrude beyond the surface (18),
**characterized in that**
the pegs (20, 20') of the drainage body connecting elements (1, 2) are insertable into one another.

2. The assembly according to claim 1,
**characterized in that**
the pegs (20, 20') are lockable in the receiving orifice (12, 13).

3. The assembly according to anyone of the preceding claims,
**characterized in that**
the pegs (20, 20') comprise outer surfaces tapering toward a lower end (24, 24'), and preferably comprise, at an opposite upper end (25, 25'), a projecting upper edge (23, 23') which is in particular insertable in a form-fit manner into a receiving orifice (16, 17).

4. The assembly according to anyone of the preceding claims,
**characterized in that**
the first drainage body connecting element (1) and the second drainage body connecting element (2) are formed to be identical.

5. The assembly according to anyone of the preceding claims,
**characterized in that**
the pegs (20, 20') are interlockable in the position inserted into one another.

6. The assembly according to anyone of the preceding claims,
**characterized in that**
the pegs (20, 20') are interlockable at ends.

7. The assembly according to anyone of the preceding claims,
**characterized in that**
the first locking devices (22, 22') are formed such that the pegs (20, 20') are interlockable and the pegs (20, 20') are lockable with the drainage bodies (10, 11) via the first locking devices (22, 22').

8. The assembly according to anyone of the preceding claims,
**characterized in that**
the first locking devices (22, 22') are formed for interconnecting the pegs (20, 20'), and second locking devices (26) are provided for connecting the pegs (20, 20') to the drainage bodies (10, 11).

9. The assembly according to anyone of the preceding claims,
**characterized in that**
the pegs (20, 20') are formed so that they are deployable with first ends (24, 24') either countersunk into the receiving orifice (12, 13) or flush to a surface (18) of the drainage body (10, 11), or with a second end (25, 25') into the receiving orifice (12, 13) to be projecting from the surface (18) of the drainage body (10, 11).

10. The assembly according to anyone of the preceding claims,
**characterized in that**
the web (21) is separable from the pegs (20, 20') or in particular is splittable in the middle.

11. The assembly according to anyone of the preceding claims,
**characterized in that**
the drainage body connecting element (1, 2) is formed as an injection molded part, in particular from plastic, and the pegs (20, 20') and/or the web (21) are formed as hollow bodies.

## Revendications

1. Assemblage comprenant deux corps de tranchée drainante (10, 11) reliés par des éléments de liaison de corps de tranchée drainante (1, 2), sachant que les éléments de liaison de corps de tranchée drainante (1, 2) présentent respectivement :
deux tourillons (20, 20') reliés par une entretoise (21) et aptes à être respectivement insérés dans une ouverture de logement (12, 13) d'un corps de tranchée drainante (10, 11) de telle sorte que deux corps de tranchée drainante (10, 11) soient reliés l'un à l'autre par l'entretoise (21),
des premiers dispositifs de verrouillage (22) par lesquels un premier élément de liaison de corps de tranchée drainante (1) peut être relié à un deuxième (2) de telle façon que le premier élément de liaison de corps de tranchée drainante (1) soit montable dans un premier corps de tranchée drainante (10) de niveau ou en retrait par rapport à la surface (18) de celui-ci et le deuxième élément de liaison de corps de tranchée drainante (2) soit montable sur le premier élément de liaison de corps de tranchée drainante (1) en saillie (18) au-dessus de la surface (18),
**caractérisé en ce que**
les tourillons (20, 20') des éléments de liaison de corps de tranchée drainante (1, 2) sont enfichables les uns dans les autres.

2. Assemblage selon la revendication 1,
**caractérisé en ce que**
les tourillons (20, 20') sont verrouillables dans l'ouverture de logement (12, 13).

3. Assemblage selon l'une des revendications précédentes,
**caractérisé en ce que**
les tourillons (20, 20') présentent des faces extérieures se terminant de façon conique vers une extrémité inférieure (24, 24') et présentent de préférence, à une extrémité supérieure (25, 25') opposée, un bord supérieur (23, 23') en saillie qui est insérable en particulier par complémentarité de forme dans une ouverture de logement (16, 17).

4. Assemblage selon l'une des revendications précédentes,
**caractérisé en ce que**
le premier (1) et le deuxième élément de liaison de corps de tranchée drainante (2) sont constitués de façon identique.

5. Assemblage selon l'une des revendications précédentes,
**caractérisé en ce que**
les tourillons (20, 20') sont verrouillables les uns avec les autres dans la position enfichée les uns dans les autres.

6. Assemblage selon l'une des revendications précédentes,
**caractérisé en ce que**
les tourillons (20, 20') sont verrouillables les uns avec les autres à des extrémités.

7. Assemblage selon l'une des revendications précédentes,
**caractérisé en ce que**
les premiers dispositifs de verrouillage (22, 22') sont constitués de telle façon qu'aussi bien les tourillons (20, 20') les uns avec les autres que les tourillons (20, 20') avec les corps de tranchée drainante (10, 11) soient verrouillables par les premiers dispositifs de verrouillage (22, 22').

8. Assemblage selon l'une des revendications précédentes,
**caractérisé en ce que**
les premiers dispositifs de verrouillage (22, 22') sont constitués pour relier les tourillons (20, 20') les uns avec les autres et des deuxièmes dispositifs de verrouillage (26) sont prévus pour relier les tourillons (20, 20') avec les corps de tranchée drainante (10, 11).

9. Assemblage selon l'une des revendications précédentes,
**caractérisé en ce que**
les tourillons (20, 20') sont constitués de telle sorte qu'ils soient insérables soit par des premières extrémités (24, 24') dans l'ouverture de logement (12, 13) en retrait ou de niveau par rapport à une surface (18) du corps de tranchée drainante (10, 11), soit par une deuxième extrémité (25, 25') dans l'ouverture de logement (12, 13) en saillie par rapport à la surface (18) du corps de tranchée drainante (10, 11).

10. Assemblage selon l'une des revendications précédentes,
**caractérisé en ce que**
l'entretoise (21) est détachable des tourillons (20, 20') ou séparable de ceux-ci, en particulier au milieu.

11. Assemblage selon l'une des revendications précédentes,
**caractérisé en ce que**
l'élément de liaison de corps de tranchée drainante (1, 2) est constitué comme pièce moulée par injection, en particulier en matière plastique, et les tourillons (20, 20') et/ou l'entretoise (21) sont constitués comme corps creux.
